**Europäisches Patentamt**

(19) **European Patent Office**

**Office européen des brevets**

(11) Numéro de publication: **0 187 740**
**B1**

(12) **FASCICULE DE BREVET EUROPÉEN**

(45) Date de publication du fascicule du brevet:
**29.06.88**

(21) Numéro de dépôt: **84902696.8**

(22) Date de dépôt: **11.07.84**

(86) Numéro de dépôt international:
**PCT/CH 84/00112**

(87) Numéro de publication internationale:
**WO 86/00765 (30.01.86 Gazette 86/03)**

(51) Int. Cl.⁴: **H 02 K 37/12,** H 02 K 21/24,
G 04 C 13/11, G 04 C 15/00

(54) **MOTEUR MONOPHASE A ROTOR AIMANTE.**

(43) Date de publication de la demande:
**23.07.86 Bulletin 86/30**

(45) Mention de la délivrance du brevet:
**29.06.88 Bulletin 88/26**

(84) Etats contractants désignés:
**CH DE FR GB LI NL**

(56) Documents cité:
**DE-A-2 938 771**
**FR-A-1 238 445**
**FR-A-2 209 246**
**FR-A-2 283 576**
**FR-A-2 435 150**
**GB-A-1 531 314**
**GB-A-1 537 048**
**GB-A-1 586 056**

(73) Titulaire: **GROSJEAN, Michel, 1, rue des**
**Narcisses, CH- 2504 Bienne (CH)**

(72) Inventeur: **GROSJEAN, Michel, 1, rue des**
**Narcisses, CH- 2504 Bienne (CH)**

(74) Mandataire: **Micheli, Michel- Pierre, MICHELI &**
**CIE 118, Rue du Rhône Case Postale 47, CH- 1211**
**Genève 6 (CH)**

## Description

Cette invention se rapporte au moteur monophasé à rotor aimanté. Il existe différents types de moteurs à rotor aimanté.

Il existe en outre différents moteurs du même type que celui selon l'invention. Par même type, on veut dire que le moteur comporte un rotor dont les axes de magnétisation sont parallèles à l'axe de rotation du rotor tels que décrits par exemple dans les documents FR-A-2 435 150 et FR-A-2 283 576. Toutefois, les moteurs existants de ce type présentent des défauts au niveau de la conception de leur structure, qui pénalisent en particulier leur rendement. Cela apparaîtra clairement plus loin sur la base du schéma équivalent du moteur selon la présente invention.

L'invention a pour but la conception d'un moteur électrique de rendement optimum dans un encombrement donné, utilisant des matériaux existants et fabricable par des procédés industriels.

Un autre but de l'invention est la conception d'un moteur dont la gamme des puissances puisse être très étendue, sans modification de la conception du moteur.

Un autre but de la présente invention est la conception d'un moteur dont le nombre de pas par tour puisse être très étendu, sans modification de la conception du moteur.

Il apparaîtra que la structure du moteur faisant l'objet de l'invention peut être adaptée au fonctionnement en mode pas à pas ou en mode continu, habituellement appelé synchrone.

En mode pas à pas, pour un encombrement réduit de 8 x 8 x 2 mm, en utilisant pour le rotor un matériau en samarium-cobalt de 20 MGOe et tout en étant fabricable industriellement en grandes séries, le moteur selon l'invention présente un rendement de l'ordre de 50%. Le rendement est encore supérieur lorsque l'encombrement est plus important, les matériaux utilisés plus performants et les tolérances de fabrication plus serrées.

La puissance peut être typiquement de 100 μW pour les faibles puissances et peut être étendue à des puissances beaucoup plus élevées, sans modification de la conception du moteur.

Le domaine d'application du moteur de la présente invention est donc très vaste.

On peut mentionner:

l'instrumentation médicale, y compris les systèmes implémentables dans le corps humain, les systèmes d'entraînement pour l'industrie aéronautique et spatiale, la bureautique, la robotique, l'appareillage photographique, les garde-temps, etc.

Plus généralement, le moteur selon la présente invention fonctionnant en mode pas à pas est adapté à tous les systèmes utilisant la technique digitale, et plus particulièrement à tous ceux où les critères d'encombrement, de rendement et de puissance sont déterminants.

L'invention a pour objet un moteur monophasé qui se caractérise par la structure décrite dans les revendications 1 à 7.

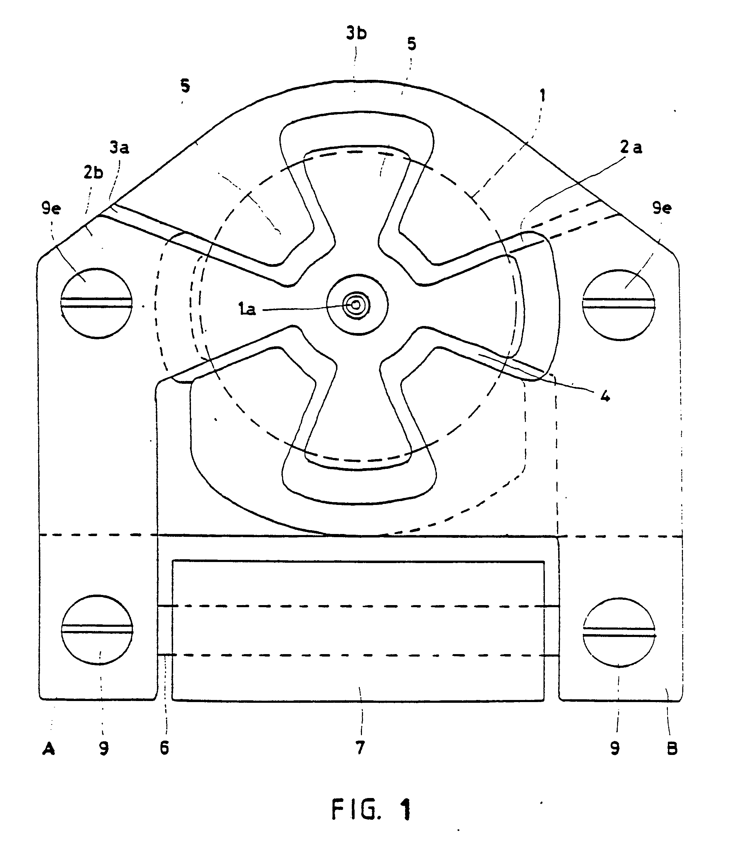

La Fig. 1 représente une vue de dessus simplifiée du moteur selon l'invention.

La Fig. 2 représente une vue éclatée simplifiée du moteur, illustrant sa structure.

La Fig. 3 représente une coupe latérale simplifiée du moteur, illustrant le principe de positionnement du moteur.

La Fig. 4 représente une coupe simplifiée du moteur, illustrant le principe de montage du rotor.

La Fig. 5 représente l'asymétrie d'un pôle d'une pièce polaire.

La Fig. 6 est un déroulement linéaire du moteur, illustrant son principe de fonctionnement.

Les Fig. 7a, 7b et 7c représentent l'allure des couples, de positionnement et mutuel, ainsi que les impulsions de tension à appliquer à la bobine, lorsque le moteur est adapté au mode de fonctionnement pas à pas bipolaire.

Les Fig. 8a et 8b représentent l'allure des couples, de positionnement et mutuel, ainsi que les impulsions de tension à appliquer à la bobine, lorsque le moteur est adapté au mode de fonctionnement pas à pas unipolaire.

Les dessins représentent à titre d'exemple le moteur selon l'invention avec un nombre de paires de pôles du rotor égal à 8 (N = 8).

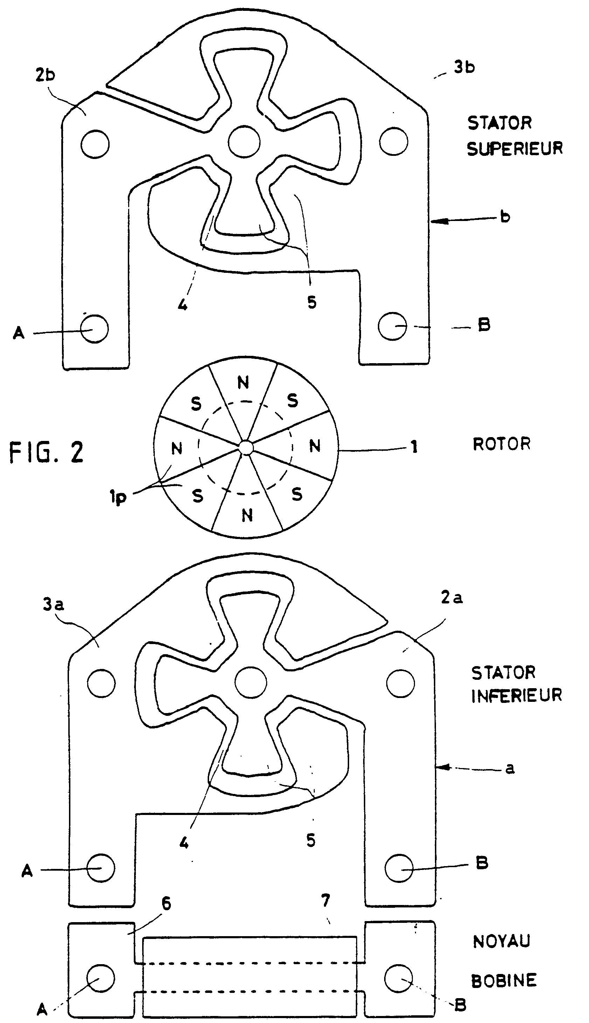

Pour la compréhension de la structure du moteur selon l'invention, on se reportera avec profit tout particulièrement à la Fig. 2.

Cette figure est une vue éclatée simplifiée de dessus du moteur, qui illustre bien la structure du moteur.

Le rotor 1 est en matériau ferromagnétique à champ coercitif élevé et à masse volumique faible, tel que samarium-cobalt. Il présente N paires de pôles 1p, dont les axes de magnétisation sont parallèles à l'axe de rotation la du rotor et espacés d'un intervalle angulaire égal. La direction de magnétisation de chacun de ces axes est opposée à celle de l'axe adjacent.

Le rotor est disposé entre deux stators, l'un, inférieur, d'indice a, l'autre, supérieur, d'indice b.

Chaque stator est constitué de deux pièces polaires coplanaires, imbriquées, l'une, intérieure, dans l'autre, extérieure, désignées ci-après:

2a pour la pièce polaire intérieure du stator inférieur a;

3a pour la pièce polaire extérieure du stator inférieur a;

2b pour la pièce polaire intérieure du stator supérieur b, et

3b pour la pièce polaire extérieure du stator supérieur b.

Les pièces polaires sont en matériau ferromagnétique à faible champ coercitif et à induction de saturation élevée.

Les deux pièces polaires de chaque stator sont coplanaires et séparées par un entrefer sinueux 4.

Chaque pièce polaire est constituée de N/2 pôles 5, espacés d'un intervalle angulaire double de celui existant entre les axes de magnétisation adjacents du rotor.

La pièce polaire intérieure 2b du stator supérieur b est reliée magnétiquement à une première extrémité A d'un noyau 6, dont la seconde extrémité B est reliée magnétiquement à la pièce polaire intérieure 2a du stator inférieur a, c'est-à-dire la pièce polaire du stator inférieur dont les pôles sont directement opposés.

L'autre pièce polaire du stator supérieur, c'est-à-dire la pièce polaire extérieure 3b, est reliée magnétiquement à la seconde extrémité B du noyau 6, dont la première extrémité A est reliée magnétiquement à la pièce polaire 3a du stator inférieur, c'est-à-dire la pièce polaire du stator inférieur dont les pôles sont directement opposés.

Le noyau 6 est en matériau ferromagnétique à faible champ coercitif et à induction de saturation élevée.

Une bobine 7 est enroulée autour du noyau.

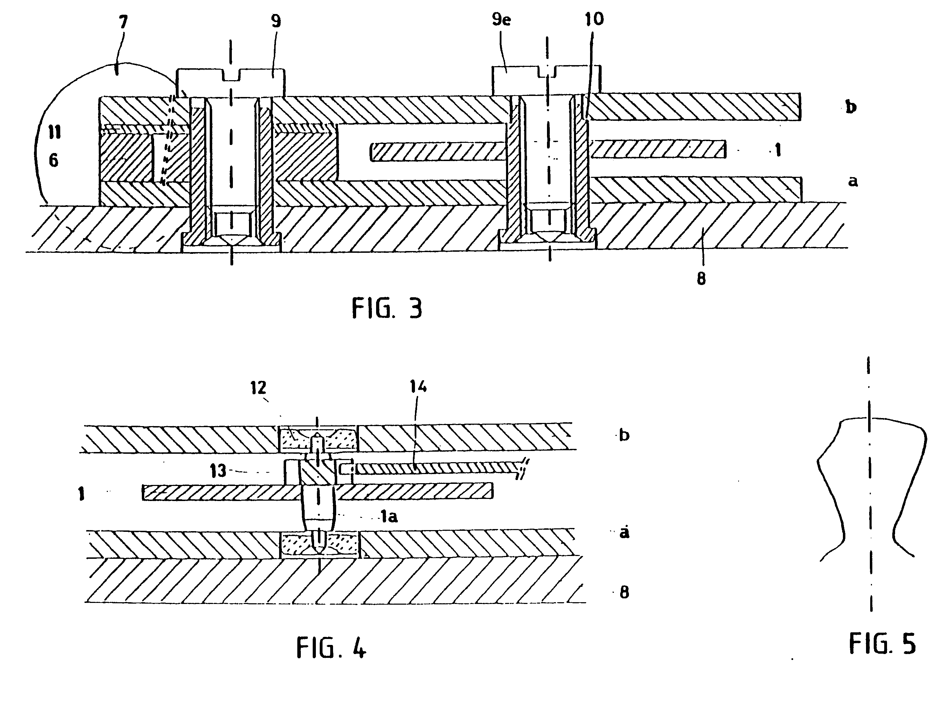

L'ensemble est monté, à titre d'exemple, de la façon illustrée sur la Fig. 3 et décrite ci-après.

Le stator inférieur est posé sur une pièce en matériau non ferromagnétique 8. Les pièces polaires 2a, 2b, 3a et 3b sont positionnées par quatre pieds-vis 9. Deux pieds-vis 9e présentent en outre un épaulement 10 sur lequel appuient les pièces polaires du stator supérieur. Les pieds-vis peuvent être en matériau ferromagnétique doux ou non. Deux entretoises 11, en matériau ferromagnétique doux, sont intercalées dans l'espace compris entre chacune des extrémités du noyau et chaque pièce polaire du stator supérieur.

Le dispositif de montage décrit ci-dessus assure, par les pieds-vis, le positionnement correct dans leurs plans des pièces polaires, et par les épaulements et les entretoises, le positionnement correct en hauteur des pièces polaires.

Le rotor est monté de la façon illustrée sur la Fig. 4.

Le rotor pivote dans des paliers 12 à faible frottement de contact. Le matériau utilisé pour les paliers est, par exemple, le rubis.

Un pignon 13 est solidaire de l'axe de rotation la du rotor et permet de transmettre le mouvement de rotation du rotor à tout le train d'engrenage 14.

Les pôles des pièces polaires peuvent en outre être rendus asymétriques par rapport aux axes radiaux définissant l'intervalle angulaire entre les pôles. Un exemple est donné sur la Fig. 5. Cette conception permet, comme nous le verrons plus loin, de créer un déphasage entre le couple de positionnement et le couple mutuel, permettant ainsi l'autodémarrage du moteur.

Il est également possible de conserver les pôles des pièces polaires symétriques et de créer le couple de positionnement et le déphasage par un système auxiliaire. De tels systèmes, qui nécessitent l'utilisation d'un aimant auxiliaire, sont connus et ne sont pas décrits ici.

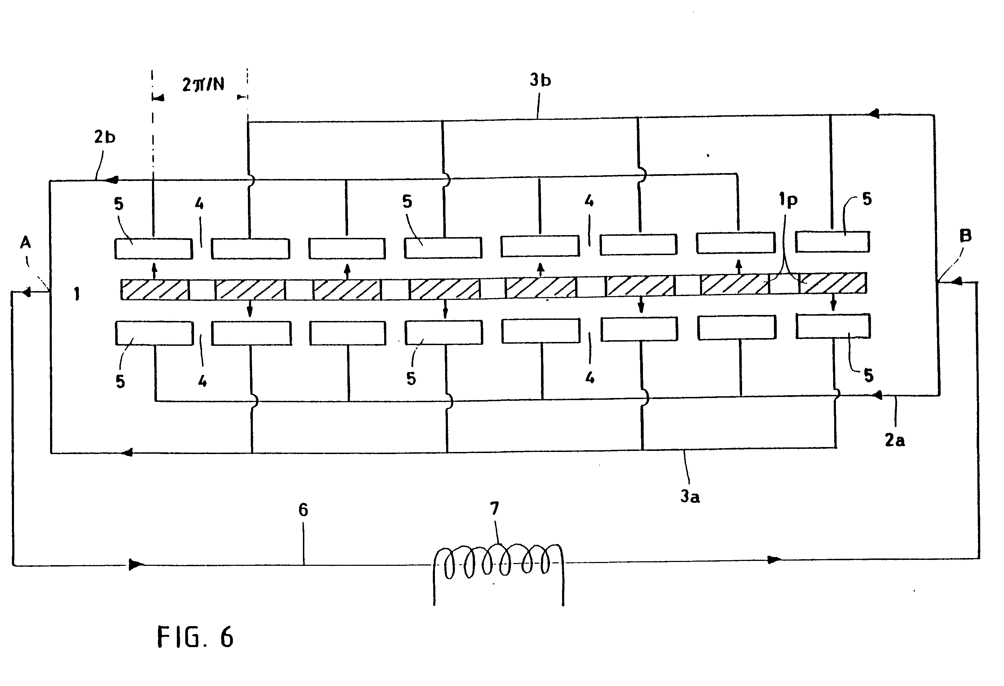

Pour la compréhension du fonctionnement du moteur selon l'invention, on se reportera avec profit à la Fig. 6.

Cette figure est un développement linéaire du moteur. Il s'agit donc d'une coupe schématisée du moteur que l'on aurait préalablement déroulé linéairement.

On reconnaît le rotor 1, où les sections hachurées correspondent aux paires de pôles. On reconnaît également les pôles 5 des pièces polaires séparées par l'entrefer 4. Les liaisons magnétiques sont schématisées symboliquement par des traits. On a également indiqué les extrémités A et B du noyau 6. La bobine 7 est enroulée autour du noyau 6.

Pour faciliter la compréhension du fonctionnement, on expose d'abord la façon dont sont créées les caractéristiques. Ensuite, on expose le comportement du moteur suivant le mode d'alimentation.

Les caractéristiques suivantes sont successivement envisagées:

-le couple mutuel, provenant de l'interaction entre le flux du rotor aimanté et le flux de la bobine, couple mutuel dont la réalisation fait l'objet principal de la présente invention;

- la perméance de la bobine;

- le couple de positionnement, c'est-à-dire celui dû au rotor aimanté, en l'absence de courant dans la bobine, et

-le déphasage introduit entre le couple mutuel et le couple de positionnement.

Pour ces deux dernières caractéristiques, on examinera différentes versions, selon le mode d'alimentation.

Venons-en au couple mutuel.

Dans la position du rotor dessinée sur la Fig. 6, les paires de pôles 1p du rotor sont directement opposées aux pôles 5 des pièces polaires des stators, inférieur et supérieur.

Considérons le chemin parcouru par les flux issus des paires de pôles du rotor, dont l'axe de magnétisation est dirigé du stator supérieur b au stator inférieur a.

Ces flux sont recueillis par la pièce polaire inférieure 3a et sont acheminés par le circuit magnétique à l'extrémité A du noyau. Au point A, le flux se dirige ensuite en grande partie dans le noyau 6, dans le sens allant de A à l'autre extrémité B du noyau. Arrivé à l'extrémité B, le flux se referme ensuite par les pôles du stator supérieur 3b.

La raison pour laquelle le flux, arrivé en A, se dirige ensuite en grande partie dans le noyau 6, et non pas dans la pièce polaire 2b, provient du fait que, pour le flux issu des paires de pôles citées du rotor, la perméance vue par le flux pour se refermer par les pôles de la pièce polaire 3b est plus grande que la perméance pour se refermer par les pôles de la pièce polaire 2b.

Ceci provient du fait que les pôles de la pièce polaire 3b sont directement opposés aux pôles de la pièce polaire 3a, ce qui n'est pas le cas pour les pôles de la pièce polaire 2b.

Toujours dans la même position du rotor, considérons le chemin parcouru par les flux issus des paires de pôles du rotor, dont l'axe de magnétisation est opposé, c'est-à-dire est dirigé du stator inférieur a au stator supérieur b. Ces flux sont recueillis par la pièce polaire supérieure 2b et sont acheminés par le circuit magnétique à l'extrémité A du noyau. Au point A, le flux se dirige ensuite en grande partie dans le noyau 6, dans le sens allant de A à l'autre extrémité B du noyau, c'est-à-dire dans le même sens que celui valable pour les paires de pôles adjacentes. Le fait que les flux de toutes les paires de pôles du rotor s'ajoutent dans le noyau provient, dans la situation décrite, de ce que la pièce polaire 2b du stator supérieur est reliée magnétiquement à l'extrémité A du noyau, dont l'autre extrémité B est reliée magnétiquement à la pièce polaire 2a du stator inférieur, tandis que l'autre pièce polaire 3b du stator supérieur est reliée magnétiquement à l' autre extrémité B du noyau, dont l'extrémité A est reliée magnétiquement à la pièce polaire du stator inférieur 3a.

On voit ainsi que dans la position du rotor dessinée sur la Fig. 6, le flux parcourant le noyau est maximum.

Pour la position du rotor décalée d'un angle valant $2\pi/N$ par rapport à la précédente, il est facile de voir que le flux parcourant le noyau est aussi maximum. mais de sens opposé à celui existant pour la position précédente du rotor.

Le moteur présente donc une inversion du flux du rotor dans le noyau sur un angle de rotation du rotor valant $2\pi/N$. Lorsque la bobine enroulée sur le noyau est alimentée, il en résulte, selon les lois de l'électromécanique, un couple d'interaction entre la bobine et le rotor aimanté, couple appelé plus loin couple mutuel, de période $4\pi/N$ et dont les positions d'équilibre correspondent aux positions du rotor, pour lesquelles les paires de pôles du rotor sont directement opposées aux pôles des pièces polaires des stators.

Venons-en à la perméance de la bobine.

La perméance de la bobine est limitée par l'entrefer sinueux existant entre les pièces polaires coplanaires de chaque stator.

Venons-en aux deux dernières caractéristiques annoncées, à savoir le couple de positionnement et le déphasage. Trois versions, relatives au mode de fonctionnement du moteur, sont successivement exposées.

Il s'agit des versions suivantes:
- moteur pas à pas bipolaire;
- moteur pas à pas unipolaire;
- moteur synchrone.

Ces appellations seront aisément compréhensibles à la suite des explications fournies plus loin.

Considérons la première version, dite moteur pas à pas bipolaire.

Venons-en au couple de positionnement.

En l'absence de courant, le moteur présente un couple dû au rotor aimanté, couple appelé plus loin couple de positionnement. Dans la position du rotor dessinée sur la Fig. 6, la perméance vue par les flux issus des paires de pôles du rotor est maximale. Dans cette position, en accord avec les lois de l'électromécanique, l'énergie magnétique étant négative, elle est minimale et correspond à une position d'équilibre stable.

Toujours en l'absence de courant, dans la position du rotor décalée de $\pi/N$ par rapport à la précédente, la perméance vue par les flux issus des paires de pôles du rotor est minimale. Dans cette position, en accord avec les lois de l'électromécanique, il correspond donc une position d'équilibre instable. Toujours en l'absence de courant, en décalant encore le rotor de $\pi/N$ par rapport à la position précédente, la perméance vue par les flux des paires de pôles du rotor est à nouveau maximale et il lui correspond une position d'équilibre stable.

Le moteur présente donc un couple de positionnement de période $2\pi/N$.

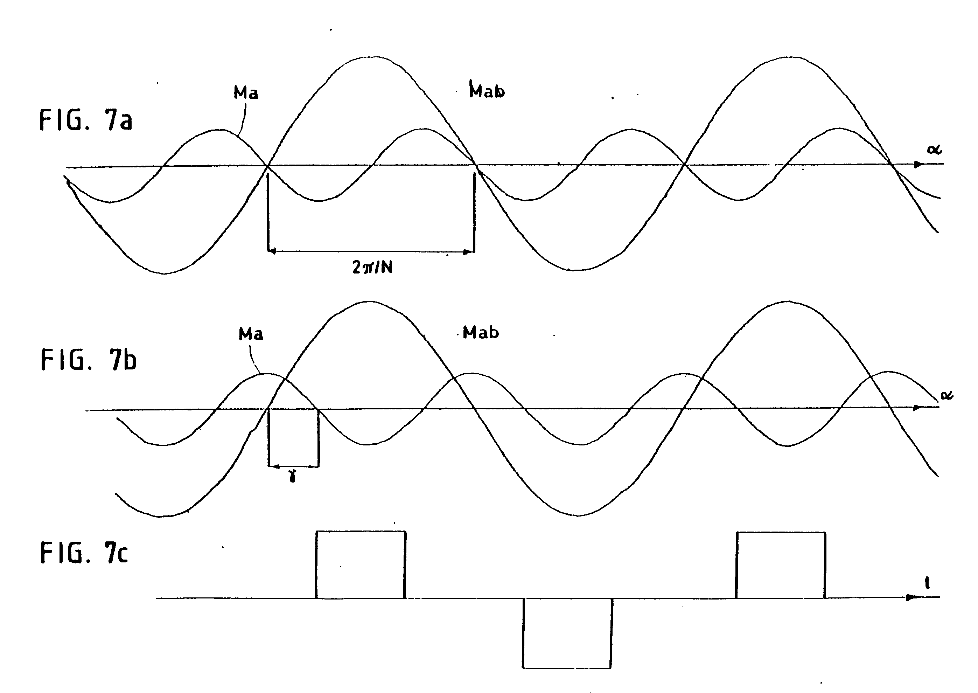

Les allures des couples de positionnement Ma et mutuel Mab sont données sur la Fig. 7a en fonction de l'angle de rotation $\mu$ du rotor. Pour fixer des ordres de grandeur, il est avantageux, du point de vue du rendement, que le rapport entre le couple de positionnement et le couple mutuel soit de l'ordre de 0,25.

Venons-en au déphasage entre le couple mutuel et le couple de positionnement.

Pour permettre le démarrage du moteur et donner un sens de rotation privilégié au rotor, il est, en effet, nécessaire de créer un déphasage angulaire entre les couples, mutuel et de positionnement.

Le déphasage $\gamma$ peut être créé, à titre d'exemple, grâce à l'asymétrie des pôles des pièces polaires. Un exemple de réalisation est donné sur la Fig. 5.

En effet, l'asymétrie des pôles des pièces polaires modifie la position du rotor pour laquelle la perméance vue par les flux des paires de pôles du rotor est maximale, et, partant, la position d'équilibre stable. Il en résulte le décalage angulaire annoncé entre le couple mutuel et le couple de positionnement, comme cela est représenté sur la Fig. 7b, en fonction de l'angle de rotation $\mu$ du rotor.

Le comportement du moteur avec les caractéristiques décrites, lorsque la bobine est alimentée, est connu et n'est pas exposé. Il est à signaler cependant que la période du couple de positionnement étant la moitié de celle du couple mutuel, le fonctionnement du moteur en mode pas à pas dans un même sens de rotation nécessite des impulsions de tension de polarité alternée, telles que celles représentées sur la Fig. 7c, en fonction du temps t. Le moteur est ainsi dit pas à pas bipolaire.

Considérons la deuxième version dite moteur pas à pas unipolaire.

Venons-en au couple de positionnement.

Dans cette variante, les pôles des pièces polaires sont dimensionnés de telle sorte que le couple de positionnement introduit par ces pôles soit négligeable vis-à-vis du couple mutuel. Cela peut se faire en particulier en diminuant l'entrefer sinueux entre les pièces polaires coplanaires des stators.

Le couple de positionnement, ainsi que le déphasage, sont créés par un système auxiliaire de telle sorte que le couple de positionnement ait une période de $4\pi/N$, c'est-à-dire la même période que celle du couple mutuel. La façon dont un tel système auxiliaire peut être conçu est connue et n'est pas exposée. Les allures des couples de positionnement Ma et mutuel Mab sont données pour cette deuxième variante sur la Fig. 8a, analogue à la Fig. 7b.

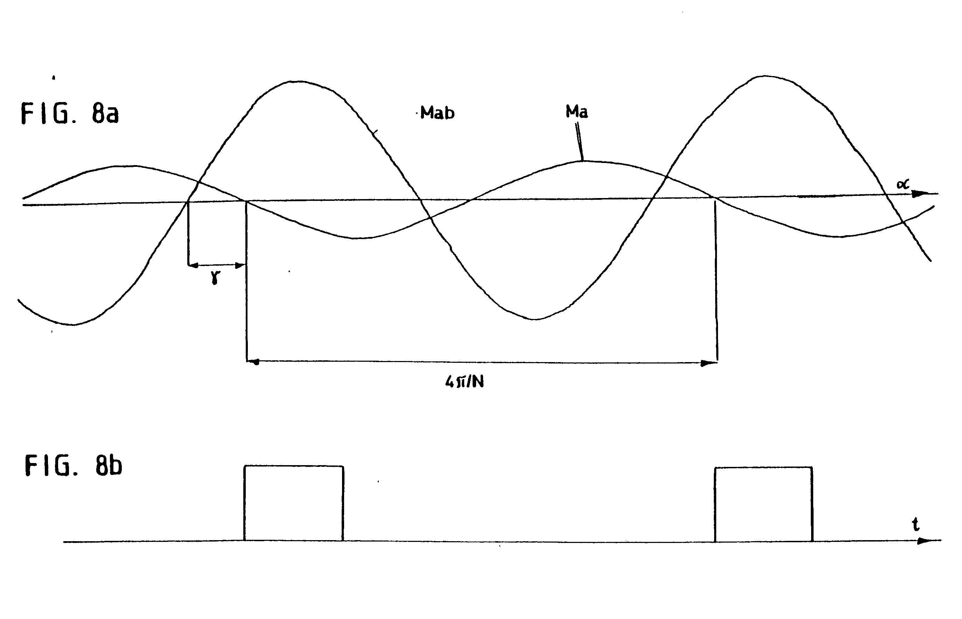

Le comportement du moteur avec les caractéristiques décrites, lorsque la bobine est alimentée, est connu et n'est pas exposé. Il est à signaler cependant que la période du couple de positionnement étant égale à celle du couple mutuel, le fonctionnement du moteur en mode pas à pas dans un même sens de rotation nécessite des impulsions de tension de même polarité, telles que celles représentées sur la Fig. 8b, analogue à la Fig. 7c. Le moteur est ainsi dit pas à pas unipolaire.

Il est clair qu'il est également possible d'utiliser un système auxiliaire dans le cas du moteur pas à pas bipolaire. Le système auxiliaire est alors conçu pour donner un couple de positionnement de période $2\pi/N$.

Considérons la troisième version dite moteur synchrone.

Il est clair que le moteur décrit, fonctionnant en mode pas à pas peut aussi fonctionner en mode continu. Le couple de positionnement est rendu négligeable vis-à-vis du couple mutuel. Il est toutefois avantageux de laisser subsister un léger couple de positionnement et un déphasage entre ce couple de positionnement et le couple mutuel, dans le but d'assurer l'autodémarrage du moteur.

Le comportement du moteur avec les cractéristiques décrites, lorsque la bobine est alimentée, est connu et n'est pas exposé. Il est à signaler, cependant, que le fonctionnement du moteur en mode continu dans un même sens de rotation nécessite une tension alternative et que la vitesse de rotation du rotor est proportionnelle à la fréquence d'alimentation. Le moteur est ainsi dit synchrone.

Venons-en à l'affirmation faite plus haut, que le moteur selon l'invention a pour but d'être optimum du point de vue du rendement. Il serait trop long d'entrer dans les détails de la théorie. Ce que l'on peut constater, c'est que pour le moteur de la présente invention, les flux de toutes les paires de pôles du rotor sont acheminés dans le même sens dans le noyau de la bobine, cela grâce à l'enchevêtrement décrit des pièces polaires intérieures et extérieures et grâce à la liaison magnétique décrite des stators, inférieur et supérieur, par le noyau de la bobine. Il n'existe ainsi aucun flux de paire de pôles qui soit perdu dans le sens où il ne se refermerait pas par le noyau et ne participerait pas de façon additive au flux mutuel. Il s'agit d'une première condition nécessaire à l'obtention d'un rendement optimum.

De plus, pour le moteur de la présente invention, le flux de chaque paire de pôles du rotor est maximisé par le fait que le flux recueilli par les pôles d'une pièce polaire d'un stator se referme par les pôles directement opposés de la pièce polaire de l'autre stator, comme il a déjà été décrit. Il s'agit d'une deuxième condition nécessaire à l'obtention d'un rendement optimum.

Enfin, pour le moteur de la présente invention, dans son mode de fonctionnement pas à pas, il faut ajouter un point supplémentaire. Le fait que le rotor soit plein, dans le sens où il n'existe pas d'intervalle angulaire entre les axes de magnétisation qui ne soit égal à $2\pi/N$, optimise, du point de vue du rendement, la relation entre le flux total des paires de pôles du rotor et l'inertie du rotor. Cela provient du fait que le rendement est une fonction croissante du flux et décroissante de l'inertie, mais que la puissance à laquelle cette fonction croît avec le flux est plus grande que la puissance à laquelle cette foncton décroît avec l'inertie.

Pour le fonctionnement en mode pas à pas, il s'agit d'une troisième condition nécessaire à l'obtention d'un rendement optimum.

Grâce à la conjonction des conditions nécessaires qui viennent d'être énumérées plus haut, il est possible d'affirmer que le moteur faisant l'objet de la présente invention est optimum du point de vue du rendement.

Il est aussi facile de déduire que les autres moteurs du même type, mais qui ne satisferaient pas à l'ensemble de ces conditions nécessaires, ne sont pas optima du point de vue du rendement.

Il va de soi, en effet, que le fonctionnement du moteur est possible, même si l'ensemble des conditions nécessaires, qui ont été énumérées, ne sont pas satisfaites. Il existe ainsi un grand nombre de variantes, qui sont des cas particuliers défavorables du point de vue du rendement du moteur selon l'invention et qui représentent, dans certains cas, des moteurs déjà existants.

On peut citer de façon non exhaustive les variantes suivantes du moteur selon l'invention. Il est entendu que pour chaque variante proposée, les modifications sont faites à partir du moteur complet selon l'invention.

Mentionnons:

-suppression de l'un des stators, les pièces polaires de l'autre stator étant reliées magnétiquement par le noyau de la bobine;

- suppression des deux pièces polaires extérieures ou des deux pièces polaires intérieures, les pièces polaires restantes étant reliées magnétiquement par le noyau;

- suppression de l'entrefer sinueux entre les pièces polaires coplanaires et remplacement pour chacun des stators par deux entrefers radiaux droits, les dits entrefers étant disposés de telle sorte que les pièces polaires coplanaires jouent, en regard des paires de pôles du rotor, le rôle que jouent les pièces polaires intérieures et extérieures du moteur selon l'invention, la liaison magnétique entre les stators, inférieur et supérieur, étant la même que pour le moteur selon l'invention.

Les différentes variantes qui viennent d'être décrites ne remplissent pas l'ensemble des conditions nécessaires à l'obtention d'un rendement optimum, contrairement au moteur selon l'invention. Il est donc justifié d'affirmer que ces variantes constituent, par la conception de leur circuit magnétique, des cas particuliers défavorables du moteur selon l'invention.

Venons-en enfin à l'affirmation faite plus haut que le moteur selon l'invention a pour but de présenter une gamme de puissances qui peut être très étendue, sans modification de la conception du moteur.

Il serait trop long d'entrer dans les détails de la théorie. Il est toutefois intuitif de remarquer que la puissance mécanique que peut fournir le moteur est une fonction croissante du nombre de paires de pôles du rotor, ainsi que du diamètre du rotor.

Cette situation permet d'étendre la gamme des puissances du moteur, sans avoir à modifier la conception du moteur. Il est donc possible d'affirmer que le moteur faisant l'objet de la présente invention présente une gamme de puissances qui peut être très étendue, sans modification de la conception du moteur.

## Revendications

1. Moteur monophasé dont le rotor (1), aimanté, entraîné en rotation à l'aide d'une bobine (7) à noyau, présente N axes de magnétisation parallèles à son axe de rotation, équidistants de celui-ci et répartis régulièrement autour de cet axe, les sens de magnétisation de deux axes adjacents étant inverses, et dont le stator (2a, 2b) comprend N épanouissements polaires (5) de chacun des deux côtés du rotor (1), chacun de ces épanouissements (5) se trouvant, à l'état de repos, au moins approximativement en regard de l'un des pôles du rotor (1), ceux des épanouissements polaires (5) situés d'un même côté du rotor (1) au nombre de n (n = N/2 > 1) et qui, dans ledit état, sont en regard de pôles du même nom du rotor (1), étant reliés magnétiquement entre eux par une pièce polaire (2a, 3a; 2b, 3b), l'une (3a, 3b) de ces pièces polaires étant périphérique et l'autre (2a, 2b) centrale, les deux pièces polaires (2a, 3a; 2b, 3b) situées du même côté du rotor (1) étant coplanaires, les épanouissements polaires (5) reliés entre eux par une pièce polaire périphérique (3a, 3b) s'étendant à partir de celle-ci vers l'axe du rotor (1) et ceux (5) reliés entre eux par une pièce polaire centrale (2a, 2b) s'étendant à partir de celle-ci vers la périphérie du rotor (1), une section de liaison connectant magnétiquement chaque pièce polaire à l'une des extrémités du noyau de la bobine, caractérisé

- en ce que chaque pièce polaire périphérique (3a, 3b) présente une brèche entre deux des épanouissements polaires (5) qu'elle relie entre eux,
- en ce que les brèches des deux pièces polaires périphériques (3a, 3b) sont décalées angulairement l'une par rapport à l'autre, et
- en ce que les sections de liaisons des pièces polaires centrales (2a, 2b) passent à travers ces brèches.

2. Moteur monophasé selon la revendication 1, dans lequel chaque pièce polaire (2a, 2b; 3a, 3b) porte un nombre n d'épanouissements polaires (5) qui est pair, le nombre N d'axes de magnétisation du rotor (1) étant égal à quatre ou à un multiple de quatre, caractérisé

en ce que les brèches des deux pièces polaires périphériques (3a, 3b) sont diamétralement opposées.

3. Moteur monophasé selon la revendication 2, caractérisé

en ce que chaque section de liaison est venue de fabrication en une pièce avec la pièce polaire correspondante (2a, 2b; 3a, 3b).

4. Moteur monophasé selon la revendication 3, caractérisé

- en ce que les sections de liaison des pièces polaires périphériques (3a,3b) partent de portions de celles-ci qui sont diamétralement opposées à leur brèche respective
- et en ce que les sections de liaison des pièces polaires centrales (2a, 2b) partent des extrémités des épanouissements polaires (5) qui sont situés en regard desdites brèches.

5. Moteur monophasé selon la revendication 2, la revendication 3 ou la revendication 4, caractérisé

- en ce que les quatre dites pièces polaires (2a, 2b, 3a, 3b) et leur section de liaison respective sont distinctes,
- en ce que les deux pièces polaires périphériques (3a, 3b) et leur section de liaison respective sont minces et ont, en en retournant l'une de 180° hors de son plan, exactement la même forme
- et en ce que les deux pièces polaires centrales (2a, 2b) et leur section de liaison respective ont, en en retournant l'une de 180° hors de son plan, exactement la même forme et la même épaisseur que les deux pièces polaires périphériques (3a, 3b) et leur section de liaison respective.

6. Moteur monophasé selon l'une quelconque des revendications précédentes, caractérisé

- en ce que la bobine (7) et son noyau (6) sont situés à côté du rotor (1) et du stator (2, 3)
- et en ce que leur axe longitudinal est à équidistance des faces extrêmes du stator (1).

7. Moteur monophasé selon l'une quelconque des revendications précédentes, caractérisé

- en ce qu'une partie des épanouissements polaires (5) présente chacun une asymétrie par rapport à son plan médian passant par l'axe du rotor (1).

## Patentansprüche

1. Einphasiger Motor, dessen Rotor (1), der mit Permanentmagneten versehen ist und mit Hilfe einer Spule (7) mit Kern in Drehung versetzt wird, N-Magnetisierungsachsen aufweist, die parallel zu seiner Rotationsachse sind, mit gleichem Abstand von dieser gleichmäßig um diese Achse verteilt sind und wobei die Magnetisierungsrichtungen zweier benachbarter Achsen jeweils umgekehrt sind und dessen Stator (2a, 2b) zu beiden Seiten des Rotors N-polare Ausbuchtungen (5) aufweist, die sich jeweils im Ruhezustand mindestens näherungsweise gegenüber einem der Pole des Rotors (1) befinden, wobei jene polaren Ausbuchtungen, die mit einer Anzahl n (n = N/2 > 1) auf einer selben Seite des Rotors (1) gelegen sind und die in dem besagten Zustand den Polen gleicher Anzahl des Rotors (1) gegenüberliegen, magnetisch untereinander mittels eines Polstücks (2a, 3a; 2b, 3b) verbunden sind, wobei eines (3a, 3b) der Polstücke peripher und das andere (2a, 2b) mittig angeordnet ist, die beiden Polstücke (2a, 3a; 2b, 3b), die auf der gleichen Seite des Rotors (1) liegen, in einer Ebene angeordnet sind, und die polaren Ausbuchtungen (5), die mittels des peripheren Polstücks (3a, 3b) miteinander verbunden sind, sich ausgehend von diesen zur Rotorachse hin erstrecken und die, die untereinander mittels des mittigen Polstückes (2a, 2b) verbunden sind, sich ausgehend von diesen zur Peripherie des Rotors (1) hin erstrecken und ein Verbindungsabschnitt jedes Polstück mit einem Ende des Kerns der Spule verbindet,
dadurch gekennzeichnet, daß
jedes periphere Polstück (3a, 3b) zwischen zwei polaren Ausbuchtungen (5) eine Lücke aufweist, die diese untereinander verbindet, daß diese Lücken zweier peripherer Polstücke (3a, 3b) winkelmäßig gegeneinander versetzt angeordnet sind und dadurch, daß die Verbindungsstücke der zentralen Polstücke (2a, 2b) diese Lücken durchqueren.

2. Einphasiger Motor nach Anspruch 1, bei dem jedes Polstück (2a, 2b; 3a, 3b) eine gerade Anzahl n-polarer Ausbuchtungen (5) aufweist und die Anzahl N der Magnetisierungsachsen des Rotors (1) gleich 4 oder ein Vielfaches von 4 ist,
dadurch gekennzeichnet, daß
die Lücken zweier peripherer Polstücke (3a, 3b) diametral gegenüberliegen.

3. Einphasiger Motor nach Anspruch 2,
dadurch gekennzeichnet, daß
jeder Verbindungsabschnitt aus demselben Stück hergestellt wird, aus dem das entsprechende Polstück (2a, 2b; 3a, 3b) hergestellt wird.

4. Einphasiger Motor nach Anspruch 3,
dadurch gekennzeichnet, daß

die Verbindungsbereiche der peripheren Polstücke (3a, 3b) Teile von diesen trennen, die ihren zugehörigen Lücken diametral gegenüberstehen und dadurch, daß die Verbindungsbereiche der zentralen Polstücke (2a, 2b) Enden der polaren Ausbuchtungen (5) abtrennen, die gegenüber diesen Lücken liegen.

5. Einphasiger Motor nach Anspruch 2, 3 oder 4,
dadurch gekennzeichnet, daß
die 4 Polstücke (2a, 2b; 3a, 3b) und ihre Verbindungsbereiche voneinander getrennt sind, daß die beiden peripheren Polstücke (3a, 3b) und ihre jeweiligen Verbindungsstücke dünn sind und beim Drehen eines Stücks um 180° aus einer Ebene die gleiche Form aufweisen und dadurch, daß die beiden zentralen Polstücke (2a, 2b) und ihre jeweiligen Verbindungstücke, wenn eines um 180° aus seiner Ebene herausgedreht wird, genau die gleiche Form und die gleiche Dicke habe wie die beiden peripheren Polstücke (3a, 3b) und wie deren zugehörige Verbindungsstücke.

6. Einphasiger Motor nach einem der vorstehenden Ansprüche,
dadurch gekennzeichnet, daß
die Spule (7) und ihr Kern (6) auf der Seite des Rotors (1) und des Stators (2, 3) angeordnet sind und dadurch, daß ihre Längsachse denselben Abstand von den Endflächen des Stators (1) aufweist.

7. Einphasiger Motor nach einem der vorstehenden Ansprüche,
dadurch gekennzeichnet, daß
ein Teil der polaren Ausbuchtungen (5) jeweils eine Asymmetrie im Verhältnis zur Mittelebene, die durch die Achse des Rotos (1) verläuft, aufweist.

## Claims

1. A single-phase motor in which the rotor (1) which is magnetised and which is driven in rotation by means of a core winding (7) has N axes of magnetisation which are parallel to its axis of rotation, which are equidistant therefrom and which are distributed regularly around said axis, the directions of magnetisation of two adjacent axes being opposite, and in which the stator (2a, 2b) comprises N pole shoes (5) on each of the two sides of the rotor (1), each of said pole shoes (5) being disposed in the rest condition at least approximately facing one of the poles of the rotor (1), those ones of the pole shoes (5) which are disposed on the same side of the rotor (1) being n (n = N/2 > 1) in number, and which in said condition are facing poles of the same name on the rotor (1) being connected magnetically to each other by a pole piece (2a, 3a; 2b, 3b), one (3a, 3b) of said pole pieces being peripheral and the other (2a, 2b) being central, the two pole pieces (2a, 3a; 2b, 3b) disposed on the same side of the rotor (1) being co-planar, the pole shoes (5) which are connected together by a peripheral pole piece (3a, 3b) extending from same towards the axis of the rotor (1) and those (5) which are connected together by a central pole piece (2a, 2b) extending from same towards the periphery of the rotor (1), a connecting section magnetically connecting each pole piece to one of the ends of the core of the winding, characterised in that
- each peripheral pole piece (3a, 3b) has an opening between two of the pole shoes (5) that it connects together,
- the openings of the two peripheral pole pieces (3a, 3b) are displaced angularly relative to each other, and
- the connecting sections of the central pole pieces (2a, 2b) pass through said openings.

2. A single-phase motor according to claim 1 wherein each pole piece (2a, 2b; 3a, 3b) carries a number (n) of pole shoes (5) which is even, the number N of axes of magnetisation of the rotor (1) being equal to four or to a multiple of four, characterised in that the openings in the two peripheral pole pieces (3a, 3b) are diametrally opposite.

3. A single-phase motor according to claim 2 characterised in that each connecting section is produced in one piece with the corresponding pole piece (2a, 2b; 3a, 3b).

4. A single-phase for according to claim 3 characterised in that
- the connecting sections of the peripheral pole pieces (3a, 3b) start from portions thereof wich are diametrally opposite to their respective openings, and
- the connecting sections of the central pole pieces (2a, 2b) start from the ends of the pole shoes (5) which are disposed facing said openings.

5. A single-phase motor according to claim 2, claim 3 or claim 4 characterised in that
- the four said pole pieces (2a, 2b, 3a, 3b) and their respective connecting sections are separate,
- the two peripheral pole pieces (3a, 3b) and their respective connecting section are thin and, when one thereof is turned through 180° out of its plane, are of exactly the same shape, and
- the two central pole pieces (2a, 2b) and their respective connecting section, when one thereof is turned through 180° out of its plane, are of exactly the same shape and the same thickness as the two peripheral pole pieces (3a, 3b) and their respective connecting section.

6. A single-phase motor according to any one of the preceding claims characterised in that
- the winding (7) and its core (6) are disposed beside the rotor (1) and the stator (2, 3), and
- their longitudinal axis is equidistant from the end faces of the stator (1).

7. A single-phase motor according to any one of the preceding claim characterised in that a part of the pole shoes (5) each has an asymmetry with respect to its central plane passing through the axis of the rotor (1).

0 187 740

FIG. 1

1

0 187 740

STATOR
SUPERIEUR

FIG. 2

ROTOR

STATOR
INFERIEUR

NOYAU

BOBINE

7  9  9e  10

11
6

b

1

a

8

FIG. 3

12  14

13

1

1a

b

a

8

FIG. 4

FIG. 5

FIG. 6

FIG. 7a

Ma

Mab

2π/N

α

FIG. 7b

Ma

Mab

τ

α

FIG. 7c

t

0 187 740

FIG. 8a

Mab    Ma

$4\pi/N$

γ

α

FIG. 8b

t

0 187 740